(19)

Europäisches Patentamt
European Patent Office
Office européen des brevets

(11) **EP 2 696 070 A1**

(12) **EUROPEAN PATENT APPLICATION**
published in accordance with Art. 153(4) EPC

(43) Date of publication:
**12.02.2014  Bulletin 2014/07**

(21) Application number: **11863128.2**

(22) Date of filing: **02.05.2011**

(51) Int Cl.:
**F03D 9/00** (2006.01)          **F03D 7/04** (2006.01)

(86) International application number:
**PCT/JP2011/060552**

(87) International publication number:
**WO 2012/137356 (11.10.2012 Gazette 2012/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **01.04.2011  JP 2011081775**

(71) Applicant: **Mitsubishi Heavy Industries, Ltd.
Tokyo 108-8215 (JP)**

(72) Inventors:
• **SHIGEMIZU, Tetsuro
Tokyo 108-8215 (JP)**

• **WAKASA, Tsuyoshi
Tokyo 108-8215 (JP)**
• **YASUGI, Akira
Tokyo 108-8215 (JP)**

(74) Representative: **Intès, Didier Gérard André et al
Cabinet Beau de Loménie
158, rue de l'Université
75340 Paris Cedex 07 (FR)**

(54) **APPARATUS FOR CONTROLLING WIND POWER GENERATION APPARATUS, WIND POWER GENERATION APPARATUS, WIND FARM, AND METHOD FOR CONTROLLING WIND POWER GENERATION APPARATUS**

(57)      An object is to rapidly recover from a voltage drop in a power grid. When the value of a grid voltage detected by a grid voltage detection unit (22) has fluctuated so as to satisfy a condition set in advance for a reference value, a control device (19) controls a wind turbine generator (14) such that a reactive current corresponding to a required output current that is determined by an active current and the reactive current and that indicates an output level to a power grid (18) on the basis of the detection result from the grid voltage detection unit (22) is output to the power grid (18).

FIG. 1

**EP 2 696 070 A1**

**Description**

Technical Field

The present invention relates to a control device of a wind turbine generator, a wind turbine generator, a wind farm, and a control method for the wind turbine generator.

{Background Art}

Wind farms include a plurality of wind turbine generators and supply power generated by the wind turbine generators to a power grid. In the event of a voltage drop or a frequency drop in the power grid due to an abnormality, such as a fault caused in the power grid, the wind farms stabilize the power grid by performing voltage support that recovers the lowered voltage by supplying a reactive current or by performing frequency support that recovers the lowered frequency by supplying an active current (Primary Frequency Control).

Patent Literature 1 describes that more output is supplied from wind turbine generators to a power grid when the power grid frequency has dropped.

{Citation List}

Patent Literature

{PTL 1} US Patent No. 7528496, Specification

Summary of Invention

Technical Problem

When an abnormality occurs in a power grid, the voltage and the frequency of the power grid tend to drop. When the power grid has experienced a voltage drop and a frequency drop, a wind turbine generator supplies power (current) to recover them. In particular, the voltage drop in the power grid must be recovered rapidly.

The present invention has been conceived in light of the above-described circumstance, and an object thereof is to provide a control device of a wind turbine generator, a wind turbine generator, a wind farm, and a control method for the wind turbine generator capable of rapidly recovering from a voltage drop in a power grid.

Solution to Problem

In order to solve the problem described above, a control device of a wind turbine generator, a wind turbine generator, a wind farm, and a control method for the wind turbine generator according to the present invention employ the following solutions.

Specifically, a control device of a wind turbine generator according to a first aspect of the present invention is a control device of a wind turbine generator that generates electricity by rotation of a rotor and supplies the generated power to a power grid, including: detection means for detecting at least one of a voltage and a frequency of the power grid; and output current control means for controlling the wind turbine generator so that, when a value detected by the detection means has fluctuated so as to satisfy a condition set in advance for a reference value, a reactive current corresponding to a required output current that is determined by an active current and a reactive current and that indicates an output level to the power grid on the basis of the detection result from the detection means is output to the power grid.

According to the first aspect of the present invention, the voltage or the frequency of the power grid is detected by the detection means. The power grid receives the supply of power from the wind turbine generator that generates electricity by rotation of the rotor.

The output current control means controls the wind turbine generator such that the required output current that is determined by the active current and the reactive current and that indicates the output level to the power grid on the basis of the detection result from the detection means is output to the power grid.

Of the current output to the power grid from the wind turbine generator, the active current contributes to an increase in the frequency of the power grid, whereas the reactive current contributes to an increase in the voltage of the power grid.

The output current control means controls the wind turbine generator such that, when the value detected by the detection means has fluctuated so as to satisfy the condition set in advance for the reference value, the reactive current corresponding to the required output current is output to the power grid.

The case where the value detected by the detection means has fluctuated so as to satisfy the condition set in advance for the reference value is a case where an abnormality such as a fault has occurred in the power grid, such as a parallel-off condition in a large-scale power plant. Specifically, when there has been an abnormality in the power grid, the output current control means causes a reactive current corresponding to the required output current to be output to the power grid from the wind turbine generator regardless of the level of the active current of the required output current.

Therefore, the control device according to the first aspect of the present invention can rapidly recover from a voltage drop in the power grid.

In addition, in the above-mentioned control device according to the first aspect, when the required output current exceeds ranges of the active current and the reactive current that can be output from the wind turbine generator, the output current control means may control the wind turbine generator such that the reactive current corresponding to the reactive current of the required output current is output to the power grid within that range.

If the degrees of the voltage drop and the frequency drop in the power grid are large, the required output current may fall outside the range that can be output by the wind turbine generator. In this case, the wind turbine generator cannot output to the power grid the current that satisfies the active current and the reactive current of the required output current.

Thus, when the required output current exceeds the range that can be output by the wind turbine generator, the above-mentioned control device according to the first aspect causes a reactive current corresponding to the reactive current of the required output current to be output from the wind turbine generator to the power grid within that range, thereby allowing the voltage drop in the power grid to be rapidly recovered from.

In addition, in the above-mentioned control device according to the first aspect, after the voltage of the power grid has recovered to a predetermined value set in advance, the output current control means may control the wind turbine generator such that the active current corresponding to the required output current is output to the power grid until the voltage and the frequency recover to the reference values.

When an abnormality has occurred in the power grid, together with the voltage of the power grid, the frequency of the power grid tends to fluctuate. However, unless the power grid voltage is of a certain magnitude, the active current (energy) for recovering the power grid frequency is difficult to take in. Thus, after the power grid voltage has recovered to a predetermined value set in advance, the output current control means controls the wind turbine generator such that an active current corresponding to the required output current is output to the power grid until the voltage and the frequency recover to the reference values.

Therefore, the above-mentioned control device according to the first aspect can rapidly recover from a frequency drop in the power grid.

On the other hand, a wind turbine generator according to a second aspect of the present invention is a wind turbine generator that generates electricity by rotation of a rotor and supplies the generated power to a power grid, including the above-mentioned control devices.

According to the second aspect of the present invention, because the above-mentioned control device is provided, it is possible to rapidly recover from a voltage drop in the power grid.

Furthermore, a wind farm according to a third aspect of the present invention includes a plurality of wind turbine generators mentioned above. The plurality of wind turbine generators are assigned to a plurality of groups with different ratios between an active current and a reactive current that are output to the power grid, in accordance with levels of any of the output from the wind turbine generators, windspeeds, and rotational speeds of the rotors.

According to the third aspect of the present invention, the plurality of wind turbine generators are assigned to a plurality of groups with different ratios between the active current and the reactive current that are output to the power grid in accordance with the level of any of the outputs from the wind turbine generators, windspeeds, and rotational speeds of the rotors. The level of any of the outputs from the wind turbine generators, the windspeeds, and the rotational speeds of the rotors includes the magnitude of a function defined on the basis of the outputs from the wind turbine generators, the windspeeds, and the rotational speeds of the rotors.

Therefore, when an abnormality occurs in the power grid, because the plurality of wind turbine generators can be assigned to a group that recovers the voltage with priority and a group that recovers the frequency with priority, it is possible to recover the voltage and the frequency of the power grid more efficiently.

In addition, a wind farm according to a fourth aspect of the present invention includes a plurality of wind turbine generators mentioned above. The plurality of wind turbine generators are assigned in advance to a plurality of groups with different ratios between an active current and a reactive current that are output to the power grid.

According to the fourth aspect of the present invention, because the plurality of wind turbine generators are assigned in advance to a plurality of groups with different ratios between active current and reactive current that are output to the power grid, it is possible to recover the voltage and the frequency of the power grid more easily and efficiently.

In addition, a control method for wind turbine generator according to a fifth aspect of the present invention is a control method for a wind turbine generator that generates electricity by rotation of a rotor and supplies the generated power to a power grid including: a first step of detecting at least one of a voltage and a frequency of the power grid; and

a second step of controlling the wind turbine generator such that, when the value detected in the first step has fluctuated so as to satisfy condition set in advance for a reference value, a reactive current corresponding to a required output current that is determined by an active current and a reactive current and that indicates output level to the power grid on the basis of the detection result from the first step is output to the power grid.

According to the fifth aspect of the present invention, because the output current control means causes a reactive current corresponding to the required output current to be output to the power grid from the wind turbine generator regardless of the level of the active current of the required output current, it is possible to rapidly recover from a voltage drop in the power grid.

Advantageous Effects of Invention

According to the present invention, an advantage is afforded in that a voltage drop in a power grid can be rapidly recovered from.

Brief Description of Drawings

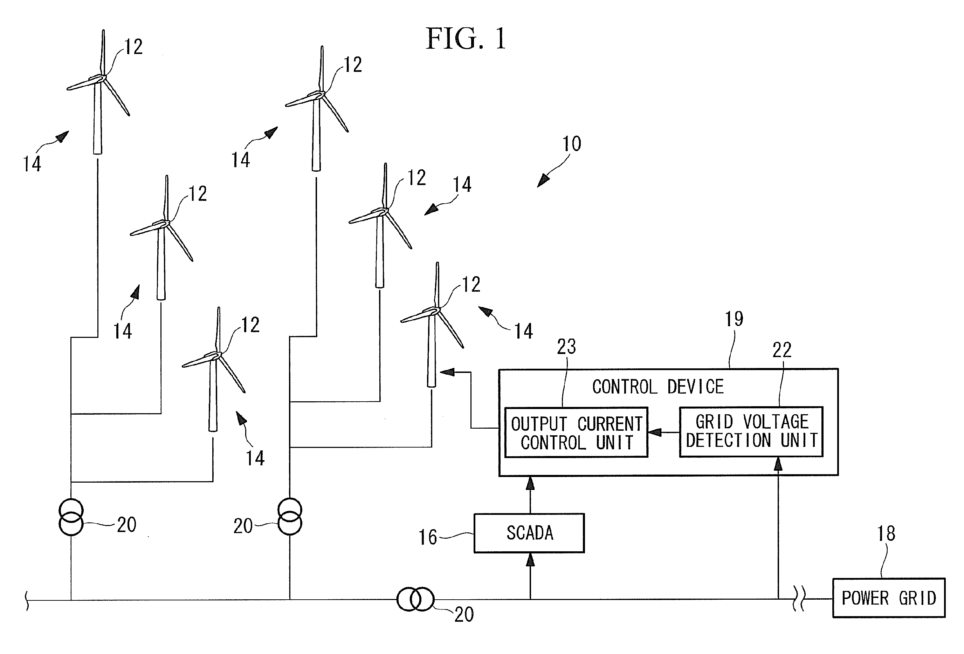

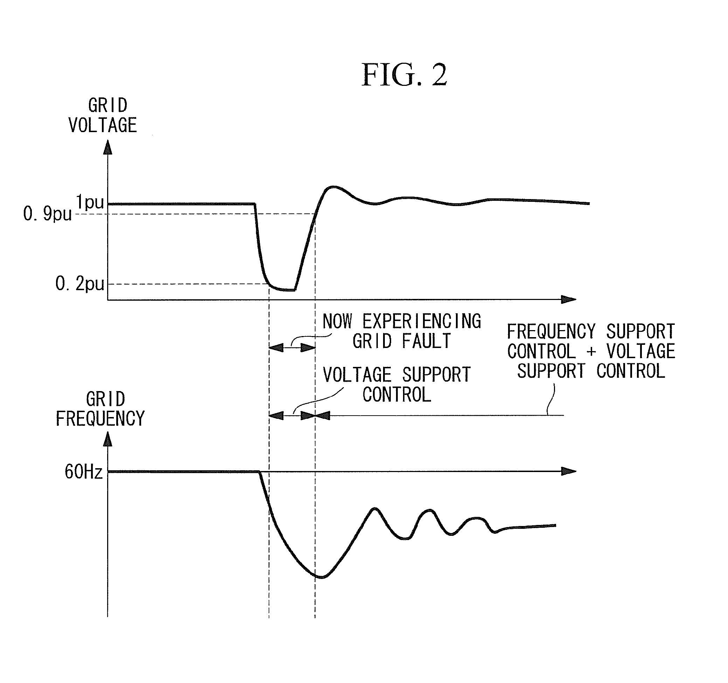

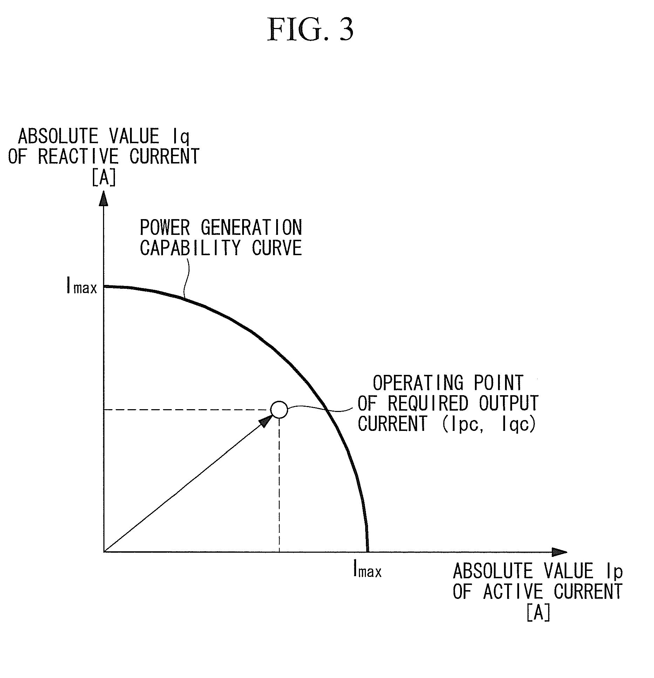

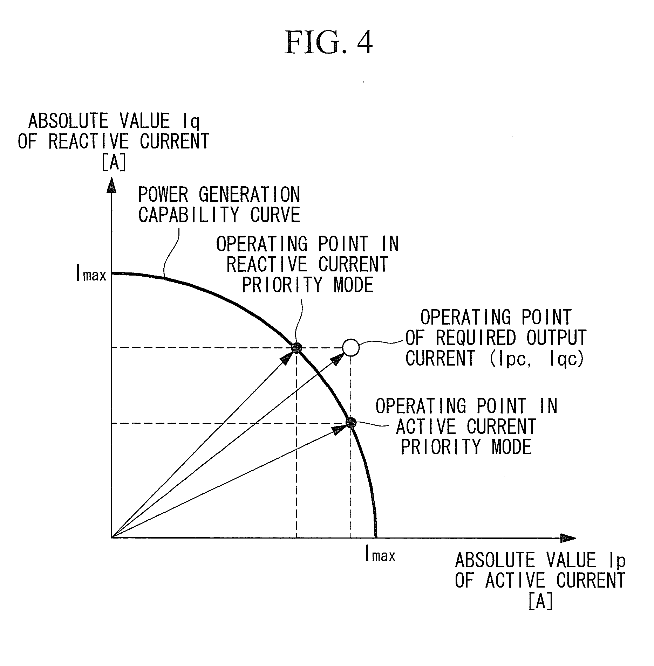

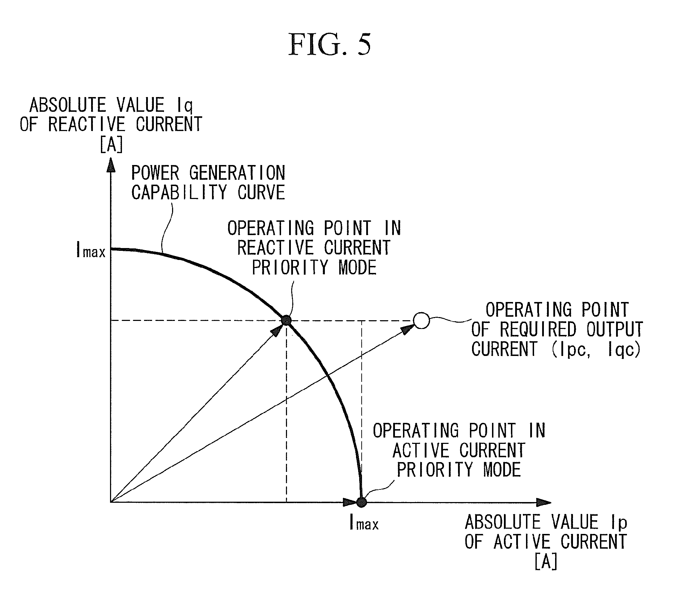

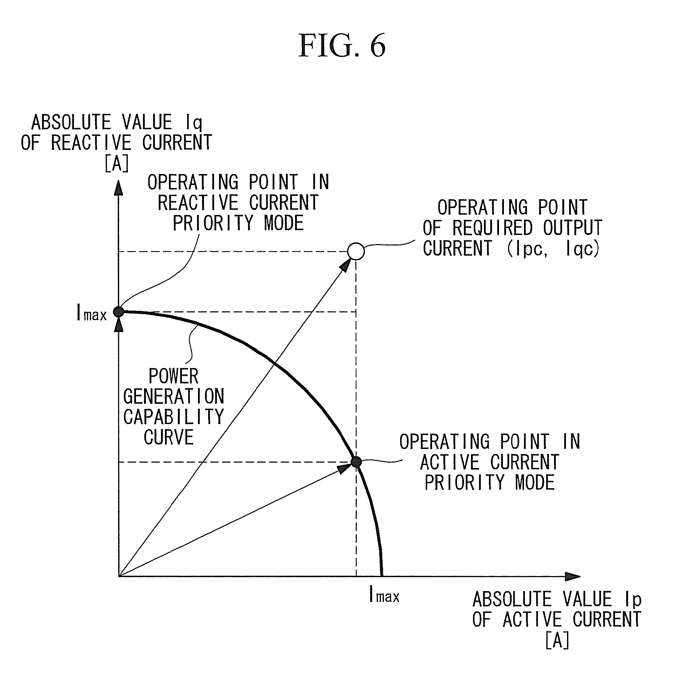

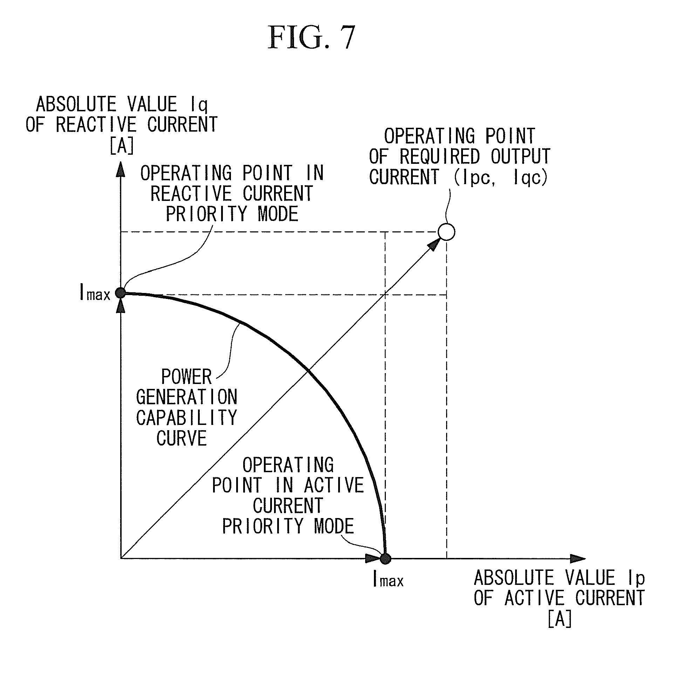

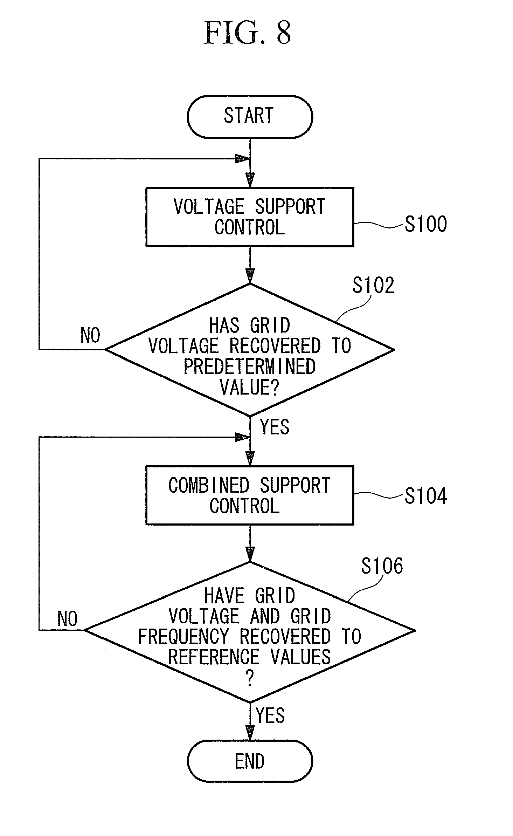

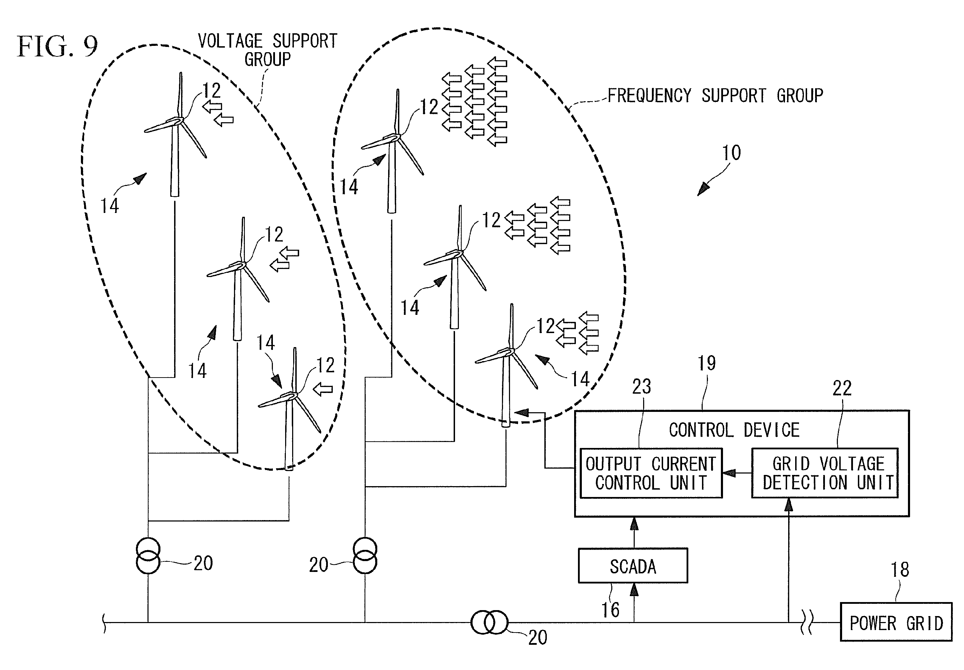

{FIG. 1} FIG. 1 is a diagram showing, in outline, an overall configuration of a wind farm according to an embodiment of the present invention.
{FIG. 2} FIG. 2 is a graph showing a grid voltage drop and a grid frequency drop in an embodiment of the present invention.
{FIG. 3} FIG. 3 is a schematic view showing a case in which a required output current according to an embodiment of the present invention is within the range of a power generation capability curve.
{FIG. 4} FIG. 4 is a schematic view showing a case in which, although an active current and a reactive current of a required output current according to an embodiment of the present invention are both equal to or less than the active current and the reactive current that can be output from a wind turbine generator, the required output current is outside the range of a power generation capability curve.
{FIG. 5} FIG. 5 is a schematic view showing a case in which a required output current falls outside the range of a power generation capability curve because an active current of the required output current according to an embodiment of the present invention is greater than the active current that can be output from a wind turbine generator.
{FIG. 6} FIG. 6 is a schematic view showing a case in which a required output current falls outside the range of a power generation capability curve because a reactive current of the required output current according to an embodiment of the present invention is greater than the reactive current that can be output from a wind turbine generator.
{FIG. 7} FIG. 7 is a schematic view showing a case in which a required output current falls outside the range of a power generation capability curve because an active current and a reactive current of the required output current according to an embodiment of the present invention are both equal to or greater than the active current and the reactive current that can be output from a wind turbine generator.
{FIG. 8} FIG. 8 is a flow chart showing the flow of processing of a power grid recovery program according to an embodiment of the present invention.
{FIG. 9} FIG. 9 is a diagram for explaining grouping of wind turbine generators according to an embodiment of the present invention.

Description of Embodiments

An embodiment of a control device of a wind turbine generator, a wind turbine generator, a wind farm, and a control method for the wind turbine generator according to the present invention will be described below with reference to the drawings.
FIG. 1 is a diagram showing the overall configuration of a wind farm 10 according to an embodiment of the present invention. A wind farm 10 is provided with a plurality of wind turbine generators 14 that generate electricity with the rotation of rotors 12 and SCADAs (Supervisory Control And Data Acquisition) 16 that are control devices that control operation states of the respective wind turbine generators 14. In this embodiment, as shown in FIG. 1, the wind farm 10 having six wind turbine generators 14 is described as an example. However, the number is not particularly limited.
The wind turbine generators 14 are electrically connected to the other wind turbine generators 14 and to a power grid 18 through transformers 20, and supply generated power to the power grid 18.
Each of the wind turbine generators 14 is provided with a control device 19. In FIG. 1, the control device 19 corresponding to only one of the wind turbine generators 14 is shown to avoid complexity.
The control devices 19 control the corresponding wind turbine generators 14 depending on control signals from the SCADAs 16. In addition, the control devices 19 are provided with grid voltage detection units 22 that detect the voltage and frequency of the power grid 18 and output current control units 23 that control the wind turbine generators 14 such that current is output to the power grid 18 in accordance with the detection results from the grid voltage detection units 22. In the following description, the voltage of the power grid 18 is called the grid voltage, and the frequency of the power grid 18 is called the grid frequency.

As shown in FIG. 2, for example, the grid voltage and the grid frequency may fluctuate from the reference values due to an abnormality, such as a fault etc., that has occurred in the power grid 18, such as a parallel-off condition in a large-scale power plant (hereinafter referred to as "grid fault"). In this embodiment, as an example, the reference value of the grid voltage is set at 1 pu and the reference value of the grid frequency is set to at 60 Hz.

When such a grid fault occurs, the control devices 19 perform a power grid recovery process that controls the supply of power to the power grid 18 from the wind turbine generators 14 such that the grid voltage drop and grid frequency drop are recovered to the reference values. Of the current that is output to the power grid 18 from the wind turbine generators 14, an active current contributes to an increase in the grid frequency, and a reactive current contributes to an increase in the grid voltage.

Next, a required output current that is determined by an active current Ipc and a reactive current Iqc and that indicates the output level to the power grid 18 on the basis of the detection results from the grid voltage detection units 22 will be described.

The required output current is calculated by the output current control units 23 on the basis of the detection results from the grid voltage detection units 22 such that the grid voltage and the grid frequency become equal to the reference values.

Specifically, when the grid voltage has dropped, in order to recover the grid voltage drop, the reactive current of the required output current is increased, and as a result, the output current control units 23 cause a reactive current corresponding to the reactive current of the required output current to be output from the wind turbine generators 14 to the power grid 18. On the other hand, when the grid frequency has dropped, in order to recover the grid frequency drop, the active current of the required output current is increased, and as a result, the output current control units 23 cause an active current corresponding to the active current of the required output current to be output from the wind turbine generators 14 to the power grid 18.

FIG. 3 shows the ranges of the active current and the reactive current that can be output from the wind turbine generators 14 in the form of a power generation capability curve, in which the horizontal axis is the active current and the vertical axis is the reactive current. Here, the power generation capability curve is expressed by equation (1).

[Eq. 1]

$$I_{\max} = \sqrt{Ip^2 + Iq^2} \qquad \cdots (1)$$

An example shown in FIG. 3 indicates, as shown with equation (2), a case in which the required output current (Ipc and Iqc) is within the range of the power generation capability curve.

[Eq. 2]

$$Ipc \leqq I_{\max}$$
$$Iqc \leqq I_{\max} \qquad \cdots (2)$$
$$\sqrt{Ipc^2 + Iqc^2} \leqq I_{\max}$$

In this case, because the required output current is within the range of the power generation capability curve, the control devices 19 control the wind turbine generators 14 with the output current control units 23 such that the required output current is output.

When the values detected by the grid voltage detection units 22 have fluctuated so as to satisfy the condition set in advance for the reference value, the output current control units 23 according to this embodiment control the wind turbine generators 14 such that the reactive current corresponding to the required output current is output to the power grid 18. In other words, when a grid fault is caused, the output current control units 23 cause a reactive current corresponding to the required output current to be output from the wind turbine generators 14 to the power grid 18 regardless of the level of the active current of the required output current.

However, as shown in FIGs. 4 to 7, if the grid voltage drop and the grid frequency drop are large, the required output current of the power grid 18 may fall outside the range of the power generation capability curve. In this case, the wind turbine generators 14 cannot output to the power grid 18 current that satisfies the active current and the reactive current of the required output current.

FIG. 4 shows an example in which, as shown in equation (3), the active current Ipc of the required output current is equal to or less than the maximum value of the active current that can be output from the wind turbine generators 14 , the reactive current Iqc of the required output current is equal to or less than the maximum value of the reactive current that can be output from the wind turbine generators 14, and the required output current in the power grid 18 is outside the range of the power generation capability curve.

[Eq. 3]

$$
\begin{aligned}
Ipc &\leqq I_{\max} \\
Iqc &\leqq I_{\max} \qquad \cdots (3) \\
\sqrt{Ipc^2 + Iqc^2} &> I_{\max}
\end{aligned}
$$

In this case, the output current control units 23 perform either one of a reactive current priority mode (a voltage support control) in which output of the reactive current is given priority or an active current priority mode (a frequency support control) in which output of the active current is given priority.

The reactive current priority mode is voltage support control in which recovery of the grid voltage is given priority over that of the grid frequency, and the wind turbine generators 14 output to the power grid 18 the reactive current corresponding to reactive current of the required output current within the range of the power generation capability curve. Therefore, as shown by the operating point for the reactive current priority mode in FIG. 4, regardless of the level of the active current of the required output current, the reactive current is output from the wind turbine generators 14 to the power grid 18 with priority over the active current.

On the other hand, the active current priority mode is frequency support control in which recovery of the grid frequency is given priority over that of the grid voltage, and the wind turbine generators 14 output to the power grid 18 the active current corresponding to the active current of the required output current within the range of the power generation capability curve. Therefore, as shown by the operating point for the active current priority mode in FIG. 4, regardless of the level of the reactive current of the required output current, the active current is output from the wind turbine generators 14 to the power grid 18 with priority over the reactive current.

Here, the output current control units 23 according to this embodiment control the wind turbine generators 14 such that, when the required output current is greater than the range of current that can be output by the wind turbine generators 14, a reactive current corresponding to the reactive current of the required output current is output to the power grid 18 within that range. Specifically, the output current control units 23 perform the voltage support control in the reactive current priority mode, thereby conducting recovery of the grid voltage with priority.

The main reason for this is that, unless the grid voltage is of a certain magnitude, the active current (energy) for recovering the grid frequency is difficult to take in.

In the example shown in FIG. 4, under the voltage support control, the wind turbine generators 14 output to the power grid 18 the reactive current on the power generation capability curve that is indicated with the operating point for the reactive current priority mode.

FIG. 5 shows an example in which, as shown in equation (4), the active current Ipc of the required output current is greater than the active current that can be output from the wind turbine generators 14, the reactive current Iqc of the required output current is equal to or less than the maximum value of the reactive current that can be output from the wind turbine generators 14, and the required output current in the power grid 18 is outside the range of the power generation capability curve.

[Eq. 4]

$$Ipc > I_{\max}$$
$$Iqc \leqq I_{\max} \qquad \cdots (4)$$
$$\sqrt{Ipc^2 + Iqc^2} > I_{\max}$$

Also in this case, under the voltage support control, the wind turbine generators 14 according to this embodiment output to the power grid 18 the reactive current on the power generation capability curve that is indicated with the operating point for the reactive current priority mode.

FIG. 6 shows an example in which, as shown in equation (5), the active current Ipc of the required output current is equal to or less than the active current that can be output from the wind turbine generators 14, the reactive current Iqc of the required output current is greater than the reactive current that can be output from the wind turbine generators 14, and the required output current in the power grid 18 is outside the range of the power generation capability curve.

[Eq. 5]

$$Ipc \leqq I_{\max}$$
$$Iqc > I_{\max} \qquad \cdots (5)$$
$$\sqrt{Ipc^2 + Iqc^2} > I_{\max}$$

Also in this case, under the voltage support control, the wind turbine generators 14 according to this embodiment output to the power grid 18 the reactive current on the power generation capability curve that is indicated with the operating point for the reactive current priority mode. However, because the reactive current Iqc of the required output current is greater than the reactive current that can be output from the wind turbine generators 14, the reactive current output from the wind turbine generators 14 becomes the maximum value of the reactive current that can be output therefrom. On the other hand, the reactive current output from the wind turbine generators 14 becomes 0 (zero).

FIG. 7 shows an example in which, as shown in equation (6), the active current Ipc of the required output current is greater than the active current that can be output from the wind turbine generators 14, the reactive current Iqc of the required output current is greater than the reactive current that can be output from the wind turbine generators 14, and the required output current in the power grid 18 is outside the range of the power generation capability curve.

[Eq. 6]

$$Ipc > I_{\max}$$
$$Iqc > I_{\max} \qquad \cdots (6)$$
$$\sqrt{Ipc^2 + Iqc^2} > I_{\max}$$

Also in this case, under the voltage support control, the wind turbine generators 14 according to this embodiment output to the power grid 18 the reactive current on the power generation capability curve that is indicated with the operating point for the reactive current priority mode. However, because the reactive current Iqc of the required output current is greater than the reactive current that can be output from the wind turbine generators 14, the reactive current output from the wind turbine generators 14 becomes the maximum value of the reactive current that can be output therefrom. On the other hand, the reactive current output from the wind turbine generators 14 becomes 0 (zero).

Next, a power grid recovery process according to this embodiment will be described with reference to FIG. 8.

FIG. 8 is a flow chart that shows the flow of processing of a power grid recovery program that is executed by the control devices 19 when the power grid recovery process according to this embodiment is to be conducted, and the power grid recovery program is stored in advance in a predetermined region in storage means (not shown) provided on the control devices 19.

The power grid recovery program according to this embodiment is initiated when the grid voltage values detected by the grid voltage detection units 22 has fluctuated so as to satisfy the condition set in advance for the reference value.

In this embodiment, as an example, as shown in FIG. 2, the above-mentioned condition is defined as a situation where a grid voltage drop of equal to or less than 0.2 pu has continued for at least 150 msec. Specifically, when the above-mentioned condition is satisfied, the power grid 18 is determined to be experiencing an abnormality. A grid voltage drop that does not satisfy the above-mentioned condition is thought to be a temporary grid voltage drop that is not due to a grid fault, noise generated upon detection of the grid voltage with the control devices 19, or the like.

Upon detecting the grid voltage drop that satisfies the above-mentioned condition, the control devices 19 execute the power grid recovery program.

In Step 100, the voltage support control is first performed, and in accordance with the reactive current in the reactive current priority mode, the reactive current on the power generation capability curve is output to the power grid 18.

In next Step 102, it is determined whether or not the grid voltage has recovered to a predetermined value (for example, 0.9 pu, see also FIG. 2). If an affirmative determination is made, the process proceeds to Step 104; on the other hand, if a negative determination is made, the process returns to Step 100 to execute the voltage support control until the grid voltage becomes a predetermined value.

In Step 104, combined support control, which is combined control of the voltage support control and the frequency support control, is performed.

As described above, unless the grid voltage is of a certain magnitude, the active current (energy) for recovering the grid frequency is difficult to take in. Therefore, with the power grid recovery process according to this embodiment, as mentioned above, when the voltage of the power grid 18 has dropped substantially due to an abnormality, such as a fault etc., the voltage support control is performed first to recover the grid voltage to a predetermined value, and thereafter, the voltage support control and the frequency support control are performed in combination to recover the grid frequency.

With the combined support control, although it is not necessary to supply more active current than the reactive current to the power grid 18, it is possible to effectively recover the grid frequency to the reference value by supplying more active current than the reactive current to the power grid 18.

In addition, with the combined support control according to this embodiment, as shown in FIG. 9, a plurality of the wind turbine generators 14 forming the wind farm 10 are assigned to a plurality of groups with different ratios between the active current and the reactive current that are output to the power grid 18.

In this embodiment, as an example, the plurality of wind turbine generators 14 are assigned to a frequency support group that performs control in the active current priority mode and a voltage support group that performs control in the reactive current priority mode, in accordance with the output level of the wind turbine generators 14 when the combined support control is performed.

The assignment of the plurality of wind turbine generators 14 to the frequency support group and the voltage support group may be define by: for example, assigning them to groups with outputs higher and lower than the average output of the whole wind farm 10 or a threshold value set in advance; assigning N units of the wind turbine generators 14 to the frequency support group in decreasing order of the output and assigning the other wind turbine generators 14 to the voltage support group; and assigning M units of the wind turbine generators 14 to the voltage support group in increasing order of the output and assigning the other wind turbine generators 14 to the frequency support group.

Specifically, because the wind turbine generators 14 having higher output can output the active current, such wind turbine generators 14 are assigned to the frequency support group.

The plurality of wind turbine generators 14 may be grouped in accordance with windspeed, which is closely related to the output of the wind turbine generators 14, instead of grouping the wind turbine generators 14 in accordance with the output levels. In this case, the frequency support group and the voltage support group may be defined by: for example, assigning the wind turbine generators 14 to groups with windspeeds higher and lower than the average windspeed of the whole wind farm 10 or a threshold value set in advance; assigning N units of the wind turbine generators 14 to the frequency support group in decreasing order of the windspeed and assigning the other wind turbine generators 14 to the voltage support group; and assigning M units of the wind turbine generators 14 to the voltage support group in increasing order of the windspeed and assigning the other wind turbine generators 14 to the frequency support group.

In addition, the plurality of wind turbine generators 14 may be grouped in accordance with the rotational speed of the rotor 12, which is closely related to the output of the wind turbine generators 14. In this case, the assignment to the frequency support group and the voltage support group may be defined by: for example, assigning the wind turbine generators 14 to groups with rotational speeds higher and lower than the average rotational speed of the whole wind farm 10 or a threshold value set in advance; assigning N units of the wind turbine generators 14 to the frequency support group in decreasing order of the rotational speed and assigning the other wind turbine generators 14 to the voltage support group; and assigning M units of the wind turbine generators 14 to the voltage support group in increasing order of the rotational speed and assigning the other wind turbine generators 14 to the frequency support group.

Furthermore, the plurality of wind turbine generators 14 may be grouped on the basis of the magnitude of a function defined on the basis of the output of wind turbine generators, the windspeeds, and the rotational speeds of the rotors.

In next Step 106, it is determined whether or not the grid voltage and the grid frequency have recovered to the reference values. If an affirmative determination is made, the program is terminated; on the other hand, if a negative determination is made, the process returns to Step 104 to execute the combined support control until the grid voltage and the grid frequency recover to the reference value.

As described above, when the grid voltage values detected by the grid voltage detection units 22 have fluctuated so as to satisfy the condition set in advance for the reference value, the control devices 19 according to this embodiment control the wind turbine generators 14 so as to output to the power grid 18 the reactive current corresponding to the required output current that is determined by the active current and the reactive current and that indicates the output level to the power grid 18 on the basis of the detection results from the grid voltage detection units 22.

By doing so, because the reactive current corresponding to the required output current is output from the wind turbine generators 14 to the power grid 18 regardless of the level of the active current of the required output current, the control devices 19 can rapidly recover from the grid voltage drop.

In addition, when the required output current is greater than the range of current that can be output by the wind turbine generators 14, because the reactive current corresponding to the reactive current of the required output current is output from the wind turbine generators 14 to the power grid within that range, the control devices 19 according to this embodiment can rapidly recover the grid voltage drop.

In addition, after the grid voltage has recovered to a predetermined value set in advance, the control devices 19 according to this embodiment control the wind turbine generators 14 such that the active current corresponding to the required output current is output to the power grid 18 until the grid voltage and the grid frequency recover to the reference values; therefore, it is possible to rapidly recover the grid frequency drop.

Although the present invention has been described above using the above-described embodiment, the technical scope of the present invention is not limited to the scope described in the above-described embodiment. Various changes or improvements may be added to the above-described embodiment within a range that does not depart from the gist of the invention, and the technical scope of the present invention encompasses configurations with such changes or improvements.

For example, in the above-mentioned embodiment, the case in which the control devices 19 execute the power grid recovery process when the grid voltage detected by the grid voltage detection units 22 has dropped so as to satisfy the condition set in advance for the reference value has been described in the above-described embodiment; however, the present invention is not limited thereto. For example, an embodiment in which the control devices 19 are provided with grid frequency detection units that detect the grid frequency, and the power grid recovery process is executed when the grid frequency detected by the grid frequency detection unit has dropped so as to satisfy the condition set in advance for the reference value is also possible. In this embodiment, for example, the control devices 19 execute the power grid recovery process when a grid frequency drop of equal to or less than 80% of the reference value has continued for 150 msec.

In addition, an embodiment in which the control devices 19 perform power grid recovery when both the grid voltage and the grid frequency undergo drops satisfying the condition set in advance for the reference values is also possible. In this embodiment, for example, the control devices 19 execute the power grid recovery process when a grid voltage drop of equal to or less than 0.2 pu has continued for 150 msec and a grid frequency drop of equal to or less than 80% of the reference value has continued for 150 msec.

In addition, in the above-mentioned embodiment, the case in which, in the combined support control, the plurality of wind turbine generators 14 are assigned to the plurality of groups with different ratios between the active current and the reactive current that are output to the power grid 18 in accordance with the output level of the wind turbine generators 14 etc. during the combined support control is performed has been described; however, the present invention is not limited thereto, and an embodiment in which the plurality of wind turbine generators 14 are assigned in advance to a plurality of groups with different ratios between the active current and the reactive current that are output to the power grid 18 is also possible.

In this embodiment, for example, the plurality of wind turbine generators 14 are grouped such that the wind turbine generators 14 with large power generation rating are assigned to the frequency support group, and a group of the wind turbine generators 14 with small power generation rating is assigned to the voltage support group. In addition, in order to ensure the output from the wind turbine generators 14 when a grid fault occurs, the wind turbine generators 14 in deload (deload) operation, in which the output thereof is limited in advance, may be assigned to the frequency support group, and the wind turbine generators 14 not in the deload operation may be assigned to the voltage support group. Furthermore, the wind turbine generators 14 may be grouped on the basis of installation sites of the wind turbine generators 14.

In addition, in the above-mentioned embodiment, the case in which the plurality of wind turbine generators 14 are assigned to two groups, the frequency support group and the voltage support group, has been described; however, the present invention is not limited thereto, and an embodiment in which the plurality of wind turbine generators 14 are assigned to three or more groups is also possible.

In this embodiment, for example, the wind turbine generators 14 are assigned to a plurality of groups such that the reactive current to be supplied to the power grid 18 differs in a stepwise manner in accordance with the output level from the wind turbine generators 14; as a result, the larger the output of the group is, the larger the contribution thereof to the frequency support becomes. By doing so, it is possible to achieve grouping in accordance with more complex wind conditions.

In addition, in the above-mentioned embodiment, the case in which the plurality of wind turbine generators 14 are assigned to either one of the frequency support group and the voltage support group has been described; however, the present invention is not limited thereto, and an embodiment in which some of the plurality of wind turbine generators 14 are assigned to the frequency support group and the voltage support group, and the others are not assigned to either the frequency support group or the voltage support group is also possible.

In this embodiment, the wind turbine generators 14 that are not assigned to either the frequency support group or the voltage support group do not contribute to the power grid recovery process.

In addition, in the above-mentioned embodiment, the case in which the control devices 19 execute the power grid recovery process has been described; however, the present invention is not limited thereto, and an embodiment in which the SCADAs 16 detect at least one of the grid voltage and the grid frequency, and when the detected value has fluctuated so as to satisfy the condition set in advance for the reference value, each of the plurality of wind turbine generators 14 executes the power grid recovery process is also possible.

{Reference Signs List}

| | |
|---|---|
| 10 | wind farm |
| 12 | rotor |
| 14 | wind turbine generator |
| 16 | SCADA |
| 18 | power grid |
| 19 | control device |
| 22 | grid voltage detection unit |
| 23 | output current control unit |

**Claims**

1. A control device of a wind turbine generator that generates electricity by rotation of a rotor and supplies the generated power to a power grid, comprising:

    detection means for detecting at least one of a voltage and a frequency of the power grid; and
    output current control means for controlling the wind turbine generator so that, when a value detected by the detection means has fluctuated so as to satisfy a condition set in advance for a reference value, a reactive current corresponding to a required output current that is determined by an active current and the reactive current and that indicates an output level to the power grid on the basis of the detection result from the detection means is output to the power grid.

2. A control device of a wind turbine generator according to Claim 1, wherein when the required output current exceeds ranges of the active current and the reactive current that can be output from the wind turbine generator, the output current control means controls the wind turbine generator such that the reactive current corresponding to the reactive current of the required output current is output to the power grid within that range.

3. A control device of a wind turbine generator according to Claim 1 or 2, wherein, after the voltage of the power grid has recovered to a predetermined value set in advance, the output current control means controls the wind turbine generator such that the active current corresponding to the required output current is output to the power grid until the voltage and the frequency recover to the reference values.

4. A wind turbine generator that generates electricity by rotation of a rotor and supplies the generated power to a power grid, comprising
a control device according to any one of Claims 1 to 3.

5. A wind farm comprising a plurality of wind turbine generators according to Claim 4, wherein
the plurality of wind turbine generators are assigned to a plurality of groups with different ratios between the active current and the reactive current that are output to the power grid, in accordance with levels of any of outputs from the wind turbine generators, windspeeds, and rotational speeds of the rotors.

6. A wind farm comprising a plurality of wind turbine generators according to Claim 4, wherein
the plurality of wind turbine generators are assigned in advance to a plurality of groups with different ratios between the active current and the reactive current that are output to the power grid.

7. A control method for a wind turbine generator that generates electricity by rotation of a rotor and supplies the generated power to a power grid, comprising:

a first step of detecting at least one of a voltage and a frequency of the power grid; and
a second step of controlling the wind turbine generator such that, when the value detected in the first step has fluctuated so as to satisfy a condition set in advance for a reference value, a reactive current corresponding to a required output current that is determined by an active current and the reactive current and that indicates output level to the power grid on the basis of the detection result from the first step is output to the power grid.

FIG. 1

CONTROL DEVICE

OUTPUT CURRENT CONTROL UNIT

GRID VOLTAGE DETECTION UNIT

SCADA

POWER GRID

FIG. 2

# FIG. 3

ABSOLUTE VALUE Iq
OF REACTIVE CURRENT
[A]

POWER GENERATION
CAPABILITY CURVE

Imax

OPERATING POINT
OF REQUIRED OUTPUT
CURRENT (Ipc, Iqc)

Imax

ABSOLUTE VALUE Ip
OF ACTIVE CURRENT
[A]

# FIG. 4

ABSOLUTE VALUE Iq
OF REACTIVE CURRENT
[A]

POWER GENERATION
CAPABILITY CURVE

OPERATING POINT IN
REACTIVE CURRENT
PRIORITY MODE

Imax

OPERATING POINT
OF REQUIRED OUTPUT
CURRENT (Ipc, Iqc)

OPERATING POINT IN
ACTIVE CURRENT
PRIORITY MODE

Imax

ABSOLUTE VALUE Ip
OF ACTIVE CURRENT
[A]

# FIG. 5

# FIG. 6

ABSOLUTE VALUE Iq
OF REACTIVE CURRENT
[A]

OPERATING POINT IN
REACTIVE CURRENT
PRIORITY MODE

OPERATING POINT
OF REQUIRED OUTPUT
CURRENT (Ipc, Iqc)

Imax

POWER
GENERATION
CAPABILITY
CURVE

OPERATING POINT IN
ACTIVE CURRENT
PRIORITY MODE

Imax

ABSOLUTE VALUE Ip
OF ACTIVE CURRENT
[A]

# FIG. 7

ABSOLUTE VALUE Iq
OF REACTIVE CURRENT
[A]

OPERATING POINT
OF REQUIRED OUTPUT
CURRENT (Ipc, Iqc)

OPERATING POINT IN
REACTIVE CURRENT
PRIORITY MODE

Imax

POWER
GENERATION
CAPABILITY
CURVE

OPERATING
POINT IN ACTIVE
CURRENT
PRIORITY MODE

Imax

ABSOLUTE VALUE Ip
OF ACTIVE CURRENT
[A]

# FIG. 8

START

VOLTAGE SUPPORT
CONTROL ————S100

S102

HAS GRID
VOLTAGE RECOVERED TO
PREDETERMINED
VALUE?

NO

YES

COMBINED SUPPORT
CONTROL ————S104

S106

HAVE GRID
VOLTAGE AND GRID
FREQUENCY RECOVERED TO
REFERENCE VALUES
?

NO

YES

END

FIG. 9

## INTERNATIONAL SEARCH REPORT

International application No.

PCT/JP2011/060552

**A. CLASSIFICATION OF SUBJECT MATTER**
*F03D9/00*(2006.01)i, *F03D7/04*(2006.01)i

According to International Patent Classification (IPC) or to both national classification and IPC

**B. FIELDS SEARCHED**

Minimum documentation searched (classification system followed by classification symbols)
F03D9/00, F03D7/04

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | WO 2010/125687 A1 (Mitsubishi Heavy Industries, Ltd.),<br>04 November 2010 (04.11.2010),<br>claims 1 to 3; paragraphs [0016] to [0032]; fig. 1 to 4<br>(Family: none) | 1,4,7<br>5-6<br>2-3 |
| Y<br>A | WO 2009/078076 A1 (Mitsubishi Heavy Industries, Ltd.),<br>25 June 2009 (25.06.2009),<br>paragraphs [0021] to [0048]; fig. 1 to 2<br>(Family: none) | 5-6<br>2-3 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 July, 2011 (20.07.11) | 02 August, 2011 (02.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/060552 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2009-240038 A  (The Kansai Electric Power Co., Inc.), 15 October 2009 (15.10.2009), entire text; all drawings (Family: none) | 1-7 |
| A | JP 2008-301584 A  (Hitachi, Ltd.), 11 December 2008 (11.12.2008), entire text; all drawings & US 2008/0296898 A1 | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7528496 B